# FASCICULE DE BREVET EUROPEEN

(11) **EP 2 342 584 B1**
(45) Date de publication et mention de la délivrance du brevet: **15.07.2015**
(21) Numéro de dépôt: 09784039.1
(22) Date de dépôt: 16.10.2009
(51) Int. Cl.: G01S 13/78

(54) **PROCEDE POUR OPTIMISER LA GESTION DU TEMPS RADAR POUR DES RADARS SECONDAIRES FONCTIONNANT EN MODE S**
VERFAHREN ZUR OPTIMIERUNG DER RADARZEITVERWALTUNG FÜR SEKUNDÄRRADARE IM S-MODUS
METHOD FOR OPTIMISING RADAR TIME MANAGEMENT FOR SECONDARY RADARS OPERATING IN S MODE

(30) Priorité: 31.10.2008 FR 0806075
(43) Date de publication de la demande: 13.07.2011
(73) Titulaire: THALES, 92200 Neuilly-sur-Seine (FR)
(72) Inventeur: BILLAUD, Philippe, 92260 Fontenay Aux Roses (FR)
(74) Mandataire: Lucas, Laurent Jacques
(86) Numéro de dépôt international: PCT/EP2009/063528
(87) Numéro de publication internationale: WO 2010/049284

(56) Documents cités:
- EP-A1- 0 633 481
- EP-A2- 1 640 743
- EUROCONTROL: "Principles of Mode S Operation and Interrogator codes" INTERNET CITATION 18 mars 2003 (2003-03-18), XP002454133 Extrait de l'Internet: URL:http://www.eurocontrol.int/msa/gallery /content/public/documents/Princ iples%20of%20Mode%20S%20Operation%20and%20 interrogator%20Codes%202.pdf> [extrait le 2007-10-09] cité dans la demande
- ORLANDO ET AL: "Mode S Beacon System: Functional Description" PROJECT REPORT LINCOLN LABORATORY, MASSACHUSETTS INSTITUE OF TECHNOLOGY, US, [Online] no. ATC-42 (rev. D), AD-A174 950, 29 août 1986 (1986-08-29), pages 1-7, XP007909447 Extrait de l'Internet: URL:http://www.dtic.mil/cgi-bin/GetTRDoc?A D=ADA174950&Location=U2&doc=Get TRDoc.pdf>
- BAKER J L ET AL: "MODE S SYSTEM DESIGN AND ARCHITECTURE" PROCEEDINGS OF THE IEEE, IEEE. NEW YORK, US, vol. 77, no. 11, 1 novembre 1989 (1989-11-01), pages 1684-1694, XP000101183 ISSN: 0018-9219

## Description

L'invention concerne le domaine des modes d'exploitation des radars secondaires, des modes civils particulièrement mais peut être utilisée aussi avec les modes d'exploitation militaires. Elle concerne plus particulièrement la gestion du temps alloué à chacun des modes d'interrogation mis en oeuvre par un radar secondaire pour interroger les aéronefs dont il assure le contrôle.

Dans le domaine de la surveillance du trafic aérien le suivi d'aéronefs dans une zone donnée de l'espace aérien est traditionnellement assuré par deux types de radars, les radars dits primaires dont le fonctionnement connu par ailleurs et qui ne requièrent aucune coopération des cibles suivies, et les radars secondaires dont le fonctionnement suit une démarche interrogation-réponse qui nécessite que la cible interrogée, cible coopérante, réponde selon un protocole déterminé. Le temps de fonctionnement d'un radar secondaire est ainsi principalement consacré à l'émission de messages d'interrogation successifs et par la réception des réponses correspondantes émises par les différentes cibles suivies.

De nos jours le contrôle du trafic aérien au moyen de radars secondaires utilise un nombre important de modes d'interrogation. Ces modes sont notamment caractérisés par le type d'aéronef, civil ou militaire, auquel ils sont destinés et par le caractère général ou dédié des interrogations effectuées. On distingue ainsi en particulier:
- les modes d'interrogation de type IFF, à usage purement militaire, comme les modes SSR 1, 2 et 4 pour lesquels les interrogations émises par le radar secondaire sont à destination de tous les aéronefs militaires;
- les modes d'interrogation de type SSR, à usage civil et militaire, comme les modes SSR 3/A et C pour lesquels les interrogations émises par le radar secondaire sont à destination générale c'est-à-dire à destination de tous les aéronefs civils et militaires;
- les modes d'interrogation de type "All Call" (ou "AC") selon la dénomination anglo-saxonne, pour lesquels les interrogations émises par le radar secondaire sont également à destination des aéronefs Mode S à priori non encore gérés par le radar en interrogations sélectives;
- les modes d'interrogation de type "Roll Call" (ou "RC") selon la dénomination anglo-saxonne, pour lesquels les interrogations sélectives émises par le radar secondaire sont à destination particulière, chaque interrogation sélective étant destinée à un aéronef donné qui est seul à répondre à cette interrogation.

Du fait de la densité croissante des aéronefs en évolution dans une même zone de l'espace, et de la diversité des modes d'interrogation, l'optimisation du temps radar, c'est-à-dire l'optimisation du nombre d'interrogations pouvant être réalisées en un temps donné, représente par principe une tâche délicate à mener à bien. En effet, le temps au bout duquel la réponse à une interrogation donnée parvient au radar, est notamment lié au protocole employé par l'interrogation et à la distance de l'aéronef au radar, distance se situant dans les limites de la portée instrumentée du radar.

Le problème de l'optimisation de la gestion du temps se pose donc de manière de plus en plus aiguë, aussi bien pour les systèmes civils que militaires, chargés du contrôle du trafic aérien (ATC pour "Air Traffic Control" selon la dénomination anglo-saxonne). Pour répondre aux contraintes de sécurité, les radars civils (ATC) doivent en effet pouvoir tout à la fois assurer une couverture longue portée, assurer pour chaque cible suivie un nombre de coups au but important, tout particulièrement pour les modes d'interrogations SSR et IFF, tout en mettant en oeuvre des vitesses de rotation d'antenne de plus en plus élevées, en rapport avec les cadences demandées en matière de rafraichissement des informations par le radar. Les radars militaires doivent pour leur part, en plus des tâches d'interrogation dévolues aux radars civils, les modes SSR_3/A, SSR_C et le mode S (ou MS) notamment, assurer également les tâches d'interrogation en modes militaires (modes 1, 2, 4, 5).

Il en résulte que le temps d'éclairement pouvant être alloué à une cible donnée devient une ressource rare et ce d'autant plus que la vitesse de rotation du radar est importante et que le nombre de cibles à traiter va croissant.

Une solution appliquée aujourd'hui dans le domaine des radars militaires consiste à étaler sur plusieurs tours (classiquement de deux à quatre tours) la mise en oeuvre de ces différents modes d'interrogation des aéronefs suivis. Par suite, le taux de renouvellement de l'information devient plus faible ce qui conduit à un résultat, en terme de rafraichissement de l'information, opposé à celui recherché par l'utilisation d'une vitesse de rotation d'antenne plus élevée. Une telle solution est par ailleurs incompatible des contraintes de sécurité imposées dans le domaine du contrôle du trafic aérien civil, qui imposent un renouvellement régulier de l'information à chaque tour d'antenne.

En l'état actuel de l'art, la prise en compte des contraintes de sécurité imposées par les autorités de l'aviation civile internationale, ont conduit jusqu'à ce jour les industriels du domaine à allouer des périodes dédiées aux différents types d'interrogation utilisés (AC, RC, IFF ou SSR) et à séquencer ces interrogations de manière alternée. Chaque type d'interrogation se voit ainsi alloué une période de durée définie de sorte que le temps radar est décomposé en une suite de périodes consécutives, dédiées en alternance à chaque type d'interrogation. Le nombre de périodes IFF et SSR doit être suffisant par tour de l'antenne pour assurer la détection correcte de l'aéronef dans le mode SSR et IFF considéré.

Le document Eurocontrol intitulé « Principles of Mode S Opération and Interrogation Code » du 18/03/2003 explicite par ailleurs clairement qu'une allocation temporelle pour chaque tâche est conseillée.

Ainsi en l'état de l'art, durant chaque intervalle de temps dédié aux périodes d'interrogation de type RC ("Roll Call") le radar secondaire se voit contraint, la gestion des modes étant ce qu'elle est, de répondre à deux impératifs:
- gérer l'entrelacement des tâches d'interrogations sélectives en mode S des aéronefs fonctionnant dans ce mode et se trouvant dans le lobe d'antenne considéré et des tâches de réception et de traitement des réponses sélectives renvoyées par ces aéronefs, de façon en particulier à ce que l'émission d'une interrogation ne se produise pas à un instant pour lequel une autre réponse sélective à une précédente interrogation sélective parvient au radar, ni que deux interrogations sélectives ou encore deux réponses sélectives ne se chevauchent;
- interroger sélectivement avec succès, c'est à dire générant une réponse sélective décodée positivement par le radar, au moins une fois chaque aéronef fonctionnant en mode S pendant l'intervalle de temps durant lequel sa position est balayée par le lobe d'antenne.

L'agencement de ces tâches doit par ailleurs être réalisé sans chevauchement de façon à éviter les phénomènes de brouillage synchrone entre réponses sélectives.

Lors de l'introduction du mode S, la proportion d'avions équipés de moyens leur permettant d'exploiter ce mode S (MS) était faible, de l'ordre de 20%. Par suite, dans l'intervalle de temps fixe dédié aux interrogations de type Roll Call, il était possible de procéder à l'interrogation de tous les aéronefs susceptibles d'être interrogés en mode S, compte tenu de la largeur du faisceau radar et de sa position à l'instant considéré. Le reste des aéronefs, dans une proportion de l'ordre 80%, faisait alors l'objet d'interrogations en mode IFF, en mode SSR ou en mode S All Call (ou AC).

A présent, la situation est grandement inversée et on peut considérer qu'en Europe notamment, la plupart des aéronefs (plus de 95%) sont équipés de moyens permettant leur interrogation en mode S alors que seulement 5% sont équipés de moyens ne permettant de les interroger qu'en modes SSR et IFF. Cette inversion a pour principale conséquence que, les durées des périodes d'interrogation correspondant aux différents modes étant fixées, le laps de temps dédié aux interrogations de type Roll Call devient insuffisant pour répondre aux besoins du trafic alors que parallèlement ceux dédiés aux interrogations de type All Call ou SSR sont dans une large part sous-utilisés.

Le principe d'une allocation fixe de la durée des intervalles de temps correspondant à chaque type d'interrogation et de l'alternance des taches correspondantes, n'est donc plus approprié et il convient de mettre en oeuvre un principe plus adapté, qui respecte toutefois les contraintes générales imposées par les autorités de l'aviation civile internationale.

Les documents suivants décrivent des systèmes radars secondaires :
- Orlando et al. : « Mode S Beacon System: Functional Description » Project Report Lincoln Laboratory, Massachusetts Institute of Technology, no. ATC-42 (rev. D), AD -A174 950, 29 août 1986 ;
- Baker J. L. et al. : « Mode S System Design and Architecture », Proceedings of the IEEE, New York, vol. 77, no. 11, 1 novembre 1989, pages 1684-1694 ;

- EP 0 633 481 A1; et
- EP 1 640 743 A2.

Un but de l'invention est de proposer une solution permettant de résoudre le problème posé et en particulier d'utiliser de manière optimale le temps radar pour interroger le maximum d'aéronefs pendant la durée du passage du lobe d'antenne.

A cet effet l'invention a pour objet un procédé de gestion en temps réel et de séquencement des échanges d'informations entre un radar secondaire fonctionnant en mode S et une pluralité d'aéronefs, les échanges entre le radar et un aéronef donné étant réalisés, selon l'aéronef considéré, soit dans un mode d'interrogation non sélectif, SSR, IFF ou "All Call" soit en mode d'interrogation sélectif "Roll Call".

Selon l'invention ce procédé est principalement caractérisé en ce que, les échanges d'informations suivant les modes d'interrogation non sélectifs étant réalisés durant des périodes successives chaque période étant spécifiquement allouée à un ou plusieurs modes non sélectif, les échanges en mode d'interrogation sélectif sont réalisés sous la forme de transactions, chaque transaction constituant un échange d'informations entre le radar et un aéronef donné et étant intercalée temporellement dans les intervalles de temps inutilisés des séquences d'opérations interrogation-réponse en mode non sélectif.

Selon un mode de mise en oeuvre préféré, le procédé selon l'invention comporte au moins:
- un premier module chargé de la gestion temporelle et de l'agencement des échanges à effectuer au sein des périodes allouées à des échanges en mode non sélectif;
- un deuxième module chargé de la gestion temporelle des transactions à effectuer en mode sélectif;
- un troisième module chargé de l'agencement dans le temps des transactions à effectuer en mode sélectif et de l'insertion des interrogations et des réponses constituant ces transactions dans les périodes allouées aux échanges en mode non sélectif;
le deuxième module fournit au troisième module les informations relatives aux transactions à réaliser compte tenu de la position de l'antenne radar et le premier module fournit au troisième module, pour chaque période allouée à des échanges en mode non sélectif, des informations relatives à la position et à la durée des intervalles de temps durant lesquels aucun autre échange n'est possible.

Selon une variante de ce mode de mise en oeuvre préféré, le deuxième module gère en outre temporellement les tâches annexes à réaliser et que le troisième module insère ces tâches dans le séquencement général.

Selon cette variante, les tâches annexes sont exécutées durant les intervalles de temps des périodes allouées aux échanges en mode non sélectif, durant lesquels aucune opération d'interrogation ou d'écoute de réponse formant une transaction en mode sélectif n'est exécutable.

Selon cette variante, les tâches annexes sont des tâches de test de bon fonctionnement du radar.

Selon un mode de mise en oeuvre préféré pouvant être combiné au mode précédent, le deuxième module élabore un indicateur de surcharge prévisible des transactions en mode sélectif, et transmet cet indicateur au premier module et au système de gestion spatio-temporelle du radar.

L'indicateur est activé si compte tenu du nombre de transactions en mode sélectif à effectuer et des intervalles de temps durant lesquels aucune transaction n'est possible il n'est pas possible de réaliser l'ensemble des transactions en mode sélectif requises.

Selon ce mode de mise en oeuvre, lorsque l'indicateur de surcharge prévisible est activé, le premier module modifie l'enchainement des périodes d'échange d'information en mode non sélectif pour insérer des périodes d'échange d'information en mode sélectif dans cet enchainement, les échanges d'information en mode sélectif étant alors réalisés à la fois sous la forme de transactions effectuées de manière asynchrone et sous la forme de transactions exécutées durant les périodes allouées aux échanges en mode sélectif qui ont été insérées.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:
- les figures 1 et 2, des illustrations de l'état de l'art actuel en matière d'enchainement des périodes de type SSR et ALL CALL (AC) et des périodes de type ROLL CALL (RC);
- la figure 3, l'illustration du principe d'enchainement, selon l'état de l'art actuel, des différentes périodes d'interrogation mis en oeuvre par un radar civil;
- la figure 4, l'illustration du principe d'enchainement des différentes périodes et séquences d'interrogation, obtenu au moyen du procédé selon l'invention;
- la figure 5, un schéma descriptif des principaux module constituant le procédé selon l'invention;
- la figure 6, l'illustration d'une mise en oeuvre avantageuse du procédé selon l'invention.

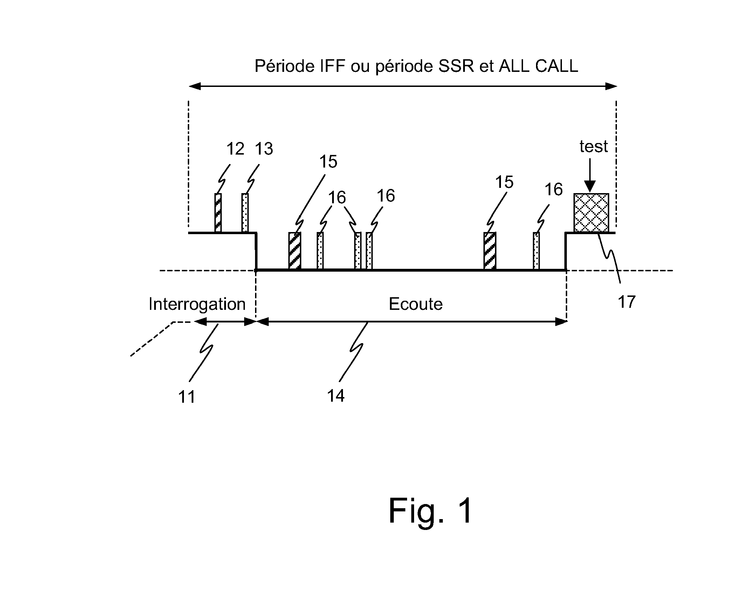

Les illustrations des figures 1 à 3 ont pour objet de mettre en évidence le problème posé en illustrant le principe de séquencement mise en oeuvre à ce jour.

Comme il a été dit précédemment un premier principe d'interrogation consiste pour le radar secondaire à émettre périodiquement un message d'interrogation à destination générale auquel, en l'absence d'instructions plus précise, chaque aéronef ayant reçu ce message doit répondre. Selon ce premier principe d'interrogation, qui correspond en pratique aux modes d'interrogation SSR et All Call (AC) (trafic aérien civile) et IFF (trafic aérien militaire), une période d'échanges se compose, comme l'illustre la figure 1, d'une première phase 11 où le radar émet, à destination générale, une interrogation 12 en mode All Call et/ou une interrogation 13 en mode SSR. Cette première phase 11 est suivie d'une deuxième phase 14 durant laquelle le radar est en écoute d'éventuelles réponses 15 ou 16 en mode All Call ou en mode SSR. La durée de la deuxième phase 14 est principalement conditionnée par la portée du radar. Les intervalles de temps non utilisés par les écoutes 15 et 16 sont généralement utilisés pour implémenter des tâches annexes 17 telles que des tâches de test.

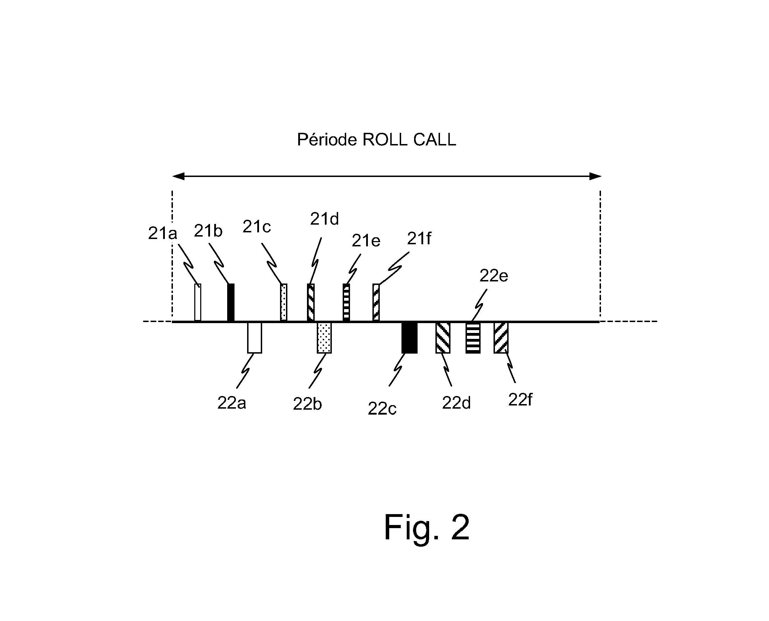

Un second principe d'interrogation, illustré par la figure 2, consiste quant à lui pour le radar secondaire à émettre une série de messages d'interrogation dédiés 21 dont chacun est destiné à un aéronef particulier et auquel seul cet aéronef est habilité à répondre. Après réception du message d'interrogation 21, l'aéronef concerné renvoi une réponse 22.

Selon ce principe les messages d'interrogation sont émis à des instants choisis de telle façon que l'émission d'un message d'interrogation ne vienne pas empêcher la réception d'une réponse envoyée par un aéronef préalablement interrogé. Pour ce faire la définition des plages d'écoute des réponses renvoyées prend notamment en compte l'incertitude de position que calcule le pistage à partir des positions de la cible aux tours précédents et des possibilités de manoeuvre de l'aéronef concerné. Le principe assure également que les plages d'écoute ne se chevauchent pas.

Ce second principe d'interrogation sélective, qui correspond en pratique aux interrogations de type ROLL CALL en mode S, suppose donc que chaque aéronef concerné ait été préalablement détecté par le radar secondaire (à l'occasion d'une interrogation de type All Call) et qu'il soit en outre équipé de moyens lui permettant d'identifier que le message d'interrogation dédié considéré lui est destiné. Il suppose également que soit connue la position à chaque instant de chaque aéronef susceptible d'être interrogé. Il suppose, en outre, de tenir compte pour l'envoi d'une interrogation sélective donnée, de la position prédite de l'aéronef concerné, l'interrogation d'un aéronef particulier à un instant donné n'étant possible que si l'aéronef est situé dans la zone balayée par le faisceau radar à cet instant.

Selon ce second mode, le radar secondaire, en tenant compte de la direction pointée par le faisceau et des informations de pistage dont il dispose, émet des messages d'interrogation 21ᵢ (i= a, b, c,...etc) à destination des différents aéronefs se trouvant selon toute vraisemblance dans la zone balayée par le faisceau radar et collecte les réponses 22i fournies par chacun des aéronefs.

Dans un fonctionnement de type Roll Call, le séquencement d'ensemble, et en particulier l'instant d'émission d'un message d'interrogation est donc déterminé de manière dynamique en fonction des positions attendues des aéronefs interrogés. La contrainte principale est ici double.

Il faut d'une part qu'une interrogation ne soit émise à un instant donné que si aucune réponse attendue n'est susceptible d'être reçue à cet instant.

Il faut d'autre part qu'une interrogation ne soit émise à un instant donné que si, compte tenu des positions relatives des aéronefs concernés par ces interrogations, aucune réponse à une interrogation précédente ne soit susceptible de parvenir simultanément à la réponse correspondant à l'interrogation émise. Autrement dit le séquencement des instants d'émission des messages 21 d'interrogation sélective dans une séquence de type Roll Call (RC) doit tenir compte d'une part de la direction pointée par le faisceau d'antenne, et d'autre part des distances des différents aéronefs susceptibles d'être interrogés par le radar durant l'intervalle de temps considéré.

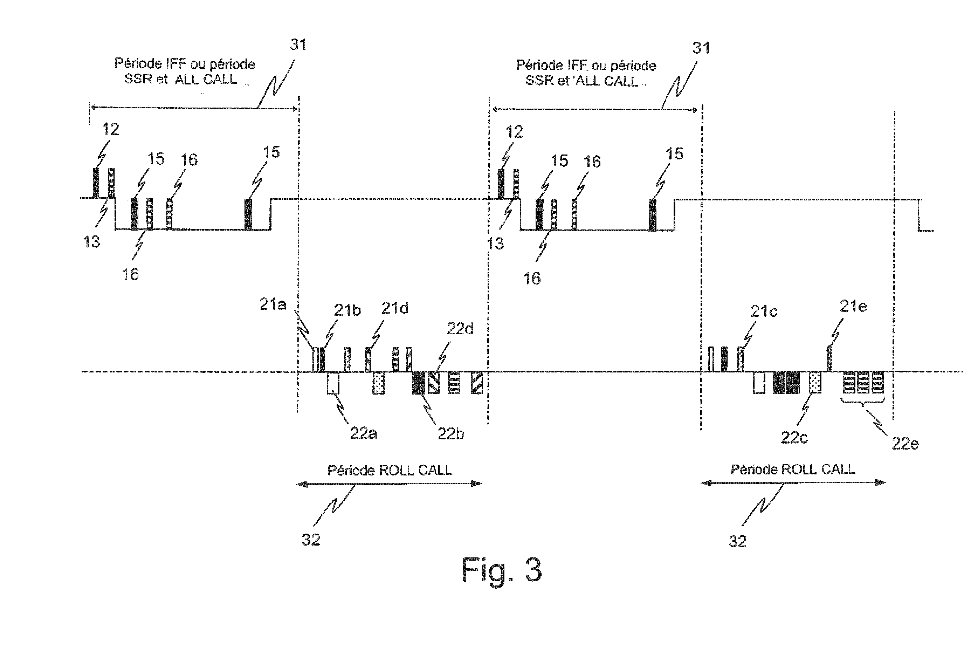

Bien que présentant de nombreux avantages par ailleurs, l'utilisation du mode d'interrogation Roll Call présente en contrepartie l'inconvénient d'impliquer une gestion du temps relativement complexe. En effet à mesure que le nombre d'aéronefs devant être gérés en mode RC grandit l'optimisation de l'utilisation du temps radar dédié aux échanges en mode RC, de façon à réaliser le plus grand nombre d'échanges possible, est de plus en plus difficile. En pratique, régime de fonctionnement établi, la majorité des aéronefs sont interrogés en mode Roll Call et seuls quelques aéronefs, par exemple ceux entrant dans l'espace surveillé et non encore identifiés à l'instant considéré ou ceux équipés de moyens leur permettant seulement d'utiliser le mode SSR ou All Call répondent dans les périodes dédiées aux interrogations-réponses de ce type. De sorte qu'à ce jour, comme l'illustre la figure 3, les plages temporelles fixes 31 allouées au fonctionnement en mode All Call sont généralement sous-utilisées alors que les plages temporelles 32 allouées au fonctionnement en mode Roll Call sont saturées. Le problème consiste donc à trouver un moyen d'accroitre le temps alloué au fonctionnement en mode Roll Call.

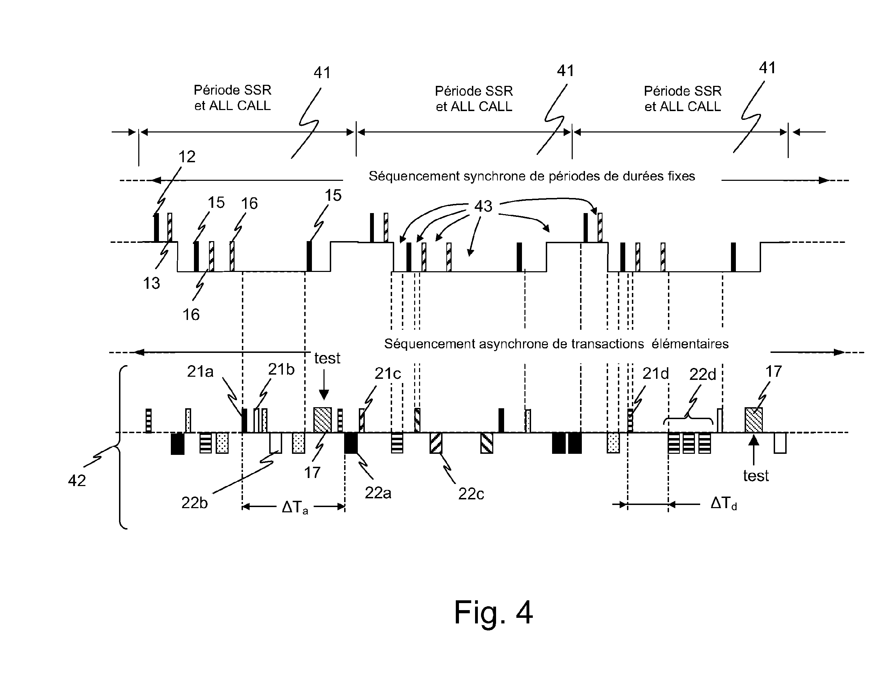

Le procédé de gestion selon l'invention permet quant à lui d'envisager un autre type d'arrangement. Ce type d'arrangement, illustré par la figure 4, permet de respecter les contraintes temporelles imposées par les différents règlements applicables au contrôle du trafic aérien, en particulier en ce qui concerne la nécessité d'affecter une durée minimum à chaque intervalle de temps alloué aux interrogations de type SSR, IFF et All Call. Il consiste principalement à substituer un arrangement nouveau à l'arrangement entièrement synchrone selon l'art antérieur, arrangement consistant en une succession de périodes d'interrogation spécifiquement allouées à des opérations d'interrogation en mode All Call, SSR ou IFF séparées les une des autres par une ou plusieurs périodes de type Roll Call.

Selon cet arrangement original, qu'on peut qualifier de mixte on forme une suite continue de périodes d'interrogation 41 en mode All Call, SSR ou IFF (les interrogations de type IFF ne sont pas représentée sur la figure dans un souci de lisibilité), dans lesquelles on insère des tâches 42 d'interrogation-réponse, des transactions, en mode Roll Call, gérées de manière asynchrone par rapport aux interrogations en mode All Call ou SSR (ou IFF).

D'un point de vue temporel, l'arrangement selon l'invention est géré par un procédé de séquencement dont le rôle consiste à partir des différentes informations qui lui sont fournies, à mettre à profit les intervalles de temps 43 laissés libres dans chacune des périodes All Call ou SSR (ou IFF) pour exécuter des tâches d'interrogation-écoute en mode Roll Call. Les tâches Roll Call exécutées sont déterminées à partir de la connaissance que le radar possède a priori, pour chaque aéronef interrogé en mode Roll Call, de la durée des signaux émis et reçus, de la distance le séparant du radar (la connaissance de la distance intégrant l'incertitude de la prédiction de la position de l'aéronef considéré), et donc du délai ΔTᵢ (i=a, b, c, ..etc) séparant l'interrogation émise par le radar de la réponse renvoyée par l'aéronef. De la sorte, le séquencement des interrogations sélectives de type Roll Call quoique toujours lié temporellement au séquencement des interrogations en mode All Call et SSR n'est plus lié à l'enchainement rigide des périodes de durées fixes qui forme ce séquencement et dans lesquelles les interrogations en mode All Call ou SSR ou IFF prennent place. L'asynchronisme ainsi mis en place permet avantageusement d'optimiser le temps radar en organisant les interrogations de type Roll Call en une séquence unique continue, asynchrone des périodes All Call, SSR et IFF, qui permet ainsi de tirer le meilleur parti du temps radar disponible. En outre, les interrogations sélectives en mode RC n'étant plus contingentées dans une période RC spécifiquement allouée à ces tâches, il est avantageusement possible de placer ces interrogations de manière spontanée au rythme de leur apparition sans avoir à mettre en oeuvre un algorithme d'optimisation de ce placement, optimisation nécessaire lorsque toutes les interrogations doivent être exécutées dans une période spécifiquement dédiée aux transactions en mode RC. De la sorte le placement peut privilégier selon les besoins soit l'optimisation du taux d'occupation du temps radar, soit un accroissement de réactivité face à un environnement pollué mais peu densément peuplé en aéronefs. Par suite la contrainte résultante n'est alors plus de devoir gérer, dans des intervalles de temps de durée fixe, un nombre d'interrogations 21ᵢ, 22ᵢ de plus en plus important, mais plutôt de gérer de manière optimisée l'utilisation de temps morts pouvant exister pour effectuer le maximum d'interrogations et réponses sélectives durant chaque temps mort. Cette substitution d'une contrainte par une autre plus lâche permet avantageusement de traiter dans un temps donné un nombre plus important d'aéronef.

Il est à noter que le procédé selon l'invention permet de gérer les tâches annexes, les tâches de test 17 en particulier, selon le même principe que les transactions en mode Roll all, c'est-à-dire de façon asynchrone du séquencement des périodes allouées. De la sorte l'exécution des tâches annexes est assurée en utilisant au mieux les intervalles de temps laissés disponibles dans les périodes allouées aux modes IFF, SSR et All Call et non employés pour réaliser des transactions en mode Roll Call. De la sorte, on est à même d'exécuter les tâches annexes à des instants opportuns choisis en fonction du nombre d'échanges d'informations à assurer.

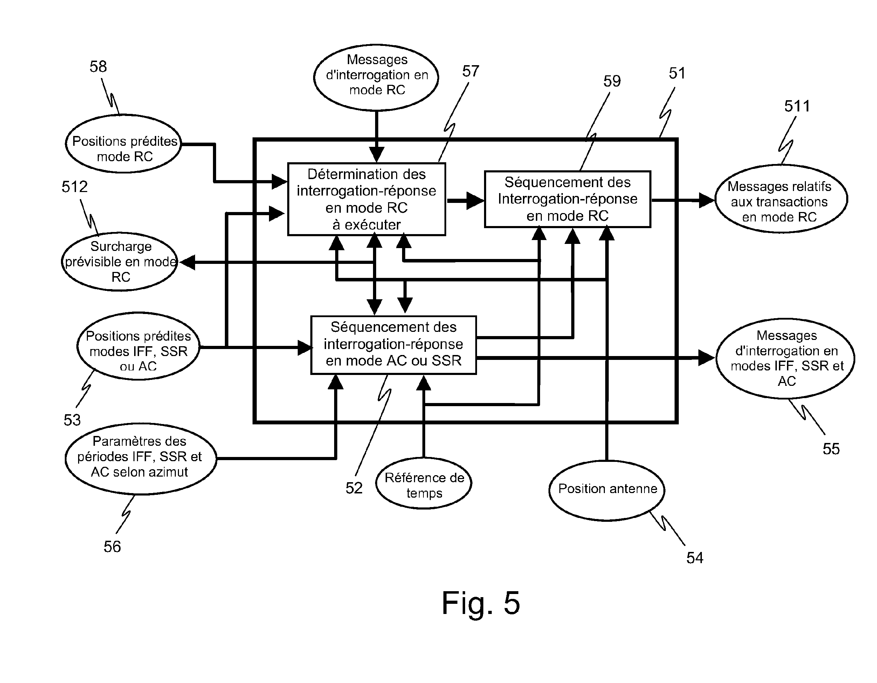

Pour constituer l'arrangement selon l'invention, décrit par la figure 4, Le procédé selon l'invention met en oeuvre différents modules de traitement présentés de manière illustrée sur la figure 5.

Comme on peut le constater sur la figure, le procédé 51 comporte principalement trois modules 52, 57 et 59 qui communiquent entre eux et échangent des informations avec les autres éléments fonctionnels du radar.

Le premier module 52 est chargé d'assurer la gestion des périodes dédiées aux échanges en modes SSR, IFF et All Call. A cet effet, Il reçoit des informations 56 lui permettant de déterminer l'enchaînement des modes d'interrogation et la durée des périodes correspondantes, selon la direction pointée par l'antenne. Ces informations sont par exemple pour chaque période la portée instrumentée souhaitée pour l'azimut considéré, ou encore le mode de communication souhaité SSR, IFF et All Call. Le module 52 élabore principalement les messages 55 décrivant les interrogations à effectuer et les délivre au sous-ensemble chargé de générer ces interrogations.

Le module 52 reçoit en outre, au rythme de leur élaboration, les informations 53 relatives aux positions prédites des aéronefs fonctionnant dans ces modes dont l'évolution est déjà prise en compte par le système de pistage du radar. Ces informations sont transmises au module 52 par le système en charge du pistage, sous forme de plots prédits donnant notamment la position en azimut et en distance de l'aéronef ainsi que l'incertitude associée à cette position.

A partir des informations relatives au mode d'interrogation à employer, des informations de pistage et de l'information 54 relative à la position de l'antenne, le module 52 élabore principalement, pour chaque période 41, des messages à destination du module 59 relatifs aux intervalles de temps correspondant aux interrogations effectuées et aux réponses attendues durant cette période, ces intervalles de temps étant alors interdits à toute autre transaction.

Le second module 57 est chargé d'assurer la gestion des échanges en modes Roll Call. A cet effet, comme le module 52, il reçoit en particulier, au rythme de leur élaboration, les informations 58 relatives aux positions prédites des aéronefs fonctionnant dans ce mode dont l'évolution est déjà prise en compte par le système de pistage du radar, ainsi que les informations relatives aux transactions à effectuer pour chacun de ces aéronefs. Pour cela, il prend en compte les informations 58 de positions des aéronefs qui, préalablement interrogés en mode All Call se sont déclarés capables de fonctionner en mode Roll Call. En pratique, ces informations sont transmises au pistage par le sous-ensemble chargé de traiter les réponses renvoyées par les aéronefs interrogés, lequel pistage les utilise pour prédire la position de l'aéronef au tour suivant.

A partir des informations dont il dispose et de l'information 54 relative à la position de l'antenne, le module 57 détermine les cibles visibles par le radar à l'instant considéré et élabore des demandes relatives aux tâches d'interrogation-réponse (i.e. aux transactions) en mode Roll Call à exécuter. Il transmet ces informations, selon un séquencement approprié, au module 59 chargé d'assurer le séquencement de ces tâches.

Le second module 57 est également chargé de prendre en compte les transactions en mode Roll Call déjà initialisées dans le lobe d'antenne avec une cible donnée et qui pour une raison quelconque nécessite un nouvel échange avec cette cible. C'est par exemple le cas lorsque l'interrogation émise n'a pas provoqué de réponse ou que la réponse reçue est erronée. C'est également le cas lorsqu'une nouvelle transaction est requise par la cible, pour un transfert d'information par exemple. Dans une telle circonstance le module 57 prépare pour le module 59 une (ou plusieurs) nouvelle demande de transaction.

Dans un mode de mise en oeuvre préféré, le module 57, reçoit également des informations relatives à diverses taches annexes à réaliser, comme notamment des tâches de test, tâche qui selon l'art antérieur connu sont généralement réalisées à des instants fixes au cours des périodes d'interrogation de type SSR, IFF ou All Call.

Le troisième module 59 a pour fonction principale de déterminer l'arrangement temporel optimal des transactions demandées par le module 57. A cet effet il reçoit du module 52 des informations relatives aux intervalles de temps durant lesquels aucune transaction en mode Roll Call n'est possible sans risquer de conflit avec les transactions réalisées dans les autres modes.

A partir des informations transmises par les modules 52 et 57 et de l'information 54 relative à la position de l'antenne, le module 59 élabore principalement les messages 511 décrivant les transactions à effectuer et les délivre selon un séquencement approprié au sous-ensemble chargé de mettre en oeuvre ces transactions (i.e. de générer les interrogations correspondantes). A cet effet, il détermine tout d'abord, en fonction de la nature et de la quantité de transactions à traiter et en prenant en compte les intervalles de temps interdits, les instants des interrogations et la position temporelle ainsi que la durée des fenêtres d'écoute correspondant à chaque transaction. Cette détermination conduit à un séquencement asynchrone de celui des tâches d'interrogation-réponse réalisées dans les autre modes de communication, IFF, SSR ou All Call. Il élabore ensuite les informations relatives aux transactions à opérer, émission d'une interrogation à un instant donné et écoute de la réponse durant un intervalle de temps déterminé. L'instant de début de l'intervalle de temps d'écoute est défini par la distance prédite de l'aéronef considéré et par l'incertitude sur la position de celui-ci. Sa durée est par ailleurs fonction de la réponse attendue de l'aéronef et de l'incertitude sur la position de celui-ci. Ces informations sont transmises, selon le séquencement établi, respectivement au sous-ensemble chargé de générer les interrogations et au sous-ensemble chargé du traitement des signaux reçus.

Comme cela a été évoqué précédemment, les instants des interrogations et la position temporelle ainsi que la durée des fenêtres d'écoute correspondant à chaque transaction peuvent être déterminés dynamiquement de différentes façons. On peut ainsi positionner les transactions au fur et à mesure, au fil de l'eau. Cette façon de procéder est à privilégier si on cherche à effectuer un placement rapide des transactions en mode Roll Call dans le séquencement général des échanges. Alternativement, on peut considérer les transactions de manière globale et ainsi mieux compacter les transactions Roll Call ceci toujours en assurant que les transactions Roll Call ne se chevauchent ni entre elles tout en respectant les intervalles de temps interdits. Cette façon de procéder est plus efficace pour occuper le temps radar disponible sur les aéronefs ce qui correspond mieux à des densités importantes en aéronefs et transactions à faire à un azimut donné.

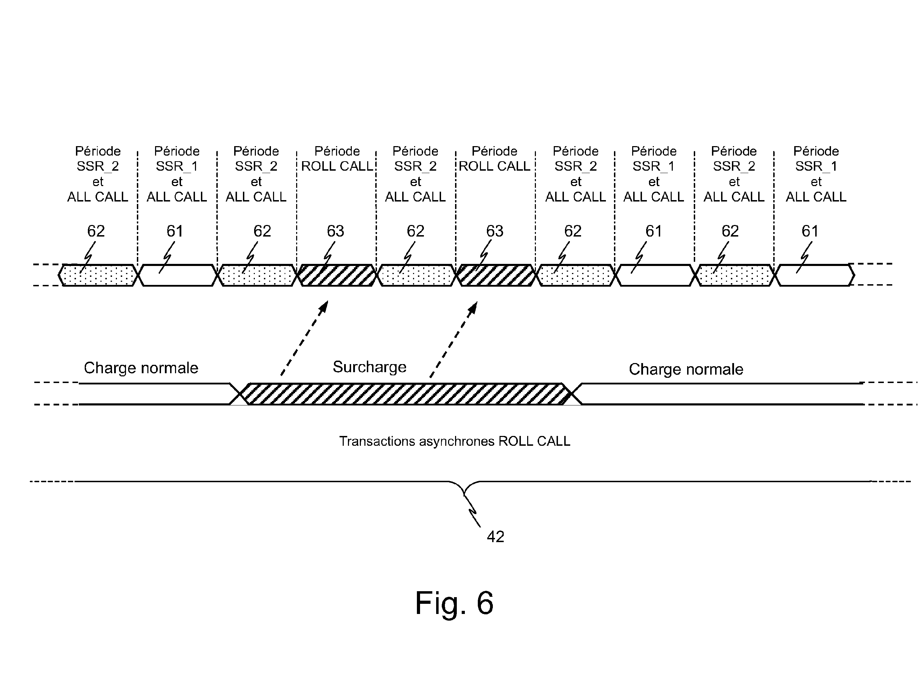

Le séquencement des transactions en mode Roll Call selon l'invention, est très largement asynchrone des périodes réalisées en mode IFF, SSR ou All Call. C'est cette organisation originale, qui utilise tous les intervalles de temps disponibles, qui permet de limiter l'apparition du phénomène de saturation des transactions en mode Roll Call, phénomène qui peut être observé dans les procédés de l'art antérieur lorsqu'on impose que les transactions sélectives en mode RC soient placées exclusivement dans des périodes RC allouées. Cependant, comme cela a également été évoqué, il peut arriver que la liberté donnée par la mise en oeuvre de ce séquencement asynchrone ne soit pas suffisante pour éviter la saturation. C'est pourquoi, le procédé selon l'invention prévoit la possibilité avantageuse d'intercaler de manière dynamique des périodes synchrones de communication allouées en mode Roll Call. Cette possibilité est particulièrement avantageuse lorsque, comme dans l'exemple de la figure 6, dans un secteur donné de l'espace surveillé le nombre d'aéronefs qui communiquent avec le radar en mode Roll Call est très important. En effet, le procédé de séquencement selon l'invention permet alors de modifier dynamiquement le séquencement des périodes d'interrogation en mode général, IFF, SSR, ou All Call, de façon à inclure localement, pour un azimut donné, une période 63 allouée aux échanges en mode Roll Call, durant laquelle on effectue des tâches de communication sélective, des transactions, en mode Roll Call, soit en lieu et place d'une des périodes 61 normalement attendue ( cas représenté sur la figure 6) soit, alternativement, en insérant cette période 63 Roll Call entre deux périodes 61 . De la sorte on effectue pendant ces périodes Roll Call 63 introduites temporairement les tâches d'interrogation sélective en mode Roll Call pour lesquelles aucune allocation d'un intervalle de temps n'aurait été possible par le séquencement asynchrone 42.

Il est à noter que le choix de substituer une période 63 à une période 61 normalement attendue ou d'insérer une période 63 entre deux périodes 61 est effectué en prenant en compte différents facteurs. Un premier facteur est notamment constitué par la marge potentielle en nombre de coups au but sur la cible dans les modes SSR, IFF et AC que la mise en oeuvre de l'invention permet d'obtenir, attendu que la suppression de toutes les périodes RC imposées rigidement dans un séquencement classique, permet soit de disposer, dans chaque mode, de plus de coups au but sur la cible, soit d'insérer des modes supplémentaires dans le séquencement. Un autre facteur est constitué par la mission du radar, plus particulièrement par la priorité principalement donnée à la qualité des données recueillies dans chaque mode ou au plus grand nombre de modes rafraîchis à chaque tour.

Cette modification de l'agencement des tâches IFF, SSR ou All call dont les périodes strictement allouées à un mode IFF, SSR ou All call peut dans ce cas être réalisé sur demande du module 57 qui transmet dans ce cas une information de surcharge prédite en mode Roll Call 512 au module 52 et au sous-ensemble radar chargé de la gestion spatio-temporelle de façon à ce que ce dernier ordonne une modification du séquencement des périodes synchrones IFF, SSR et All Call.

Cette information qui indique à ce dernier que le module 59 ne sera plus en mesure de déterminer un séquencement permettant d'exécuter toutes les transactions sélective mode Roll Call devant être effectuées est déterminée à l'avance par le module 57 en fonction du nombre prédit de transactions sélectives en mode Roll Call à placer et du nombre prédits d'aéronefs répondant dans les périodes SSR, IFF et All Call (intervalles temporels interdits). Ces deux informations déterminent un temps total dédié aux interrogations et aux réceptions qui, comparé au temps d'éclairement des cibles lui-même fonction de l'antenne du radar et de sa vitesse de rotation, permet de déterminer si le placement de toutes les interrogations sélectives mode S dans le temps restant disponible est possible ou non. Cette détermination tient compte de l'efficacité de l'algorithme utilisé par le module 59 pour effectuer le placement des interrogations et réponses relatives aux transactions en mode Roll Call dans le séquencement général.

Le sous-ensemble radar chargé de la gestion spatio-temporelle traite l'information de surcharge, de manière variable en fonction des missions prioritaires assurées par le radar dans l'azimut considéré. De la sorte, selon que l'on privilégie la surveillance des cibles communiquant en mode S ou la surveillance des aéronefs en modes SSR et IFF, les informations 56 seront ou non modifiées pour ordonner au module 52 d'introduire des périodes allouées aux communications sélectives en mode Roll Call entre les périodes de communication en mode IFF, SSR, ou All Call.

## Revendications

1. Procédé de gestion en temps réel et de séquencement des échanges d'informations entre un radar fonctionnant en mode S secondaire et une pluralité d'aéronefs, les échanges entre le radar et un aéronef donné étant réalisés, selon l'aéronef considéré, soit dans un mode d'interrogation non sélectif, SSR, IFF ou "All Call" soit en mode d'interrogation sélectif "Roll Call",
**caractérisé en ce que**, les échanges d'informations suivant les modes d'interrogation non sélectifs étant réalisés durant des périodes (41) successives chaque période étant spécifiquement allouée à un ou plusieurs modes non sélectif, les échanges en mode d'interrogation sélectif sont réalisés sous la forme de transactions (21, 22), chaque transaction constituant un échange d'informations entre le radar et un aéronef donné et étant intercalée temporellement dans les intervalles de temps inutilisés (43) pour des tâches d'interrogation-réponse en mode non sélectif dans les périodes (41) allouées aux modes non sélectifs.

2. Procédé selon la revendication 1, **caractérisé en ce qu'**il comporte au moins:
- un premier module (52) chargé de la gestion temporelle et de l'agencement des échanges à effectuer au sein des périodes allouées à des échanges en mode non sélectif;
- un deuxième module (57) chargé de la gestion temporelle des transactions à effectuer en mode sélectif;
- un troisième module (59) chargé de l'agencement dans le temps des transactions à effectuer en mode sélectif et de l'insertion des interrogations et des réponses constituant ces transactions dans les périodes allouées aux échanges en mode non sélectif;
le deuxième module (57) fournissant au troisième module (59) les informations relatives aux transactions à réaliser compte tenu de la position de l'antenne radar et le premier module (52) fournissant au troisième module (59), pour chaque période allouée à des échanges en mode non sélectif, des informations relatives à la position et à la durée des intervalles de temps (12, 13, 15 ou 16) durant lesquels aucun autre échange n'est possible

3. Procédé selon la revendication 2, **caractérisé en ce que** le deuxième module (57) gère en outre temporellement les tâches annexes (17) à réaliser et que le troisième module (59) insère ces tâches dans le séquencement général.

4. Procédé selon la revendication 3, **caractérisé en ce que** les tâches annexes (17) sont exécutées durant les intervalles de temps (43) des périodes (41) allouées aux échanges en mode non sélectif, durant lesquels aucune opération d'interrogation (21) ou d'écoute de réponse (22) formant une transaction en mode sélectif n'est exécutable.

5. Procédé selon la revendication 3, **caractérisé en ce que** les tâches annexes (17) sont des tâches de test de bon fonctionnement du radar.

6. Procédé selon les revendications 2 à 5, **caractérisé en ce que** le deuxième module (57) élabore un indicateur (512) de surcharge prévisible des transactions en mode sélectif, et transmet cet indicateur au premier module (52) et au système de gestion spatio-temporelle du radar, l'indicateur étant activé si compte tenu du nombre de transactions (21, 22) en mode sélectif à effectuer et des intervalles de temps (12, 13, 15 ou 16) durant lesquels aucune transaction n'est possible il n'est pas possible de réaliser l'ensemble des transactions (21, 22) en mode sélectif requises.

7. Procédé selon la revendication 6, **caractérisé en ce que**, lorsque l'indicateur de surcharge prévisible est activé, le premier module (52) modifie l'enchainement des périodes d'échange d'information en mode non sélectif (61, 62) pour insérer des périodes d'échange d'information en mode sélectif (63) dans cet enchainement, les échanges d'information en mode sélectif étant alors réalisés à la fois sous la forme de transactions effectuées de manière asynchrone (42) et sous la forme de transactions exécutées durant les périodes (63) allouées aux échanges en mode sélectif qui ont été insérées.

## Patentansprüche

1. Verfahren zur Echtzeit-Verwaltung und Sequenzierung von Informationsaustauschen zwischen einem im sekundären S-Modus arbeitenden Radar und mehreren Luftfahrzeugen, wobei die Austausche zwischen dem Radar und einem gegebenen Luftfahrzeug je nach dem betrachteten Luftfahrzeug entweder in einem nicht selektiven Abfragemodus SSR, IFF oder "All Call" oder in einem selektiven Abfragemodus "Roll Call" erfolgen,
**dadurch gekennzeichnet, dass** die Informationsaustausche gemäß den nicht selektiven Abfragemodi in aufeinander folgender Perioden (41) realisiert werden, wobei jede Periode spezifisch einer oder mehreren nicht selektiven Modi zugeordnet wird, wobei die Austausche im selektiven Abfragemodus in Form von Transaktionen (21, 22) realisiert werden, wobei die Transaktionen jeweils einen Informationsaustausch zwischen dem Radar und einem gegebenen Luftfahrzeug darstellen und in den unbenutzten Zeitintervallen (43) für Abfrage-Antwort-Aufgaben im nicht selektiven Modus in den Perioden (41), die den nicht selektiven Modi zugeordnet sind, zeitlich versetzt sind.

2. Verfahren nach Anspruch 1, **dadurch gekennzeichnet, dass** es wenigstens Folgendes beinhaltet:
- ein erstes Modul (52) zum zeitlichen Verwalten und Anordnen von Austauschen, die innerhalb von Perioden durchzuführen sind, die Austauschen im nicht selektiven Modus zugeordnet sind;
- ein zweites Modul (57) zum zeitlichen Verwalten von Transaktionen, die im selektiven Modus durchzuführen sind;
- ein drittes Modul (59) zum Anordnen in der Zeit von im selektiven Modus durchzuführenden Transaktionen und zum Einfügen von Abfragen und Antworten, die diese Transaktionen in den Perioden bilden, die den Austauschen im nicht selektiven Modus zugeordnet sind;
wobei das zweite Modul (57) die Informationen in Bezug auf die zu realisierenden Transaktionen unter Berücksichtigung der Position der Radarantenne zum dritten Modul (59) liefert und das erste Modul (52) für jede Periode, die den Austauschen im nicht selektiven Modus zugeordnet ist, Informationen in Bezug auf die Position und die Dauer von Zeitintervallen (12, 13, 15 oder 16) zum dritten Modul (59) liefert, während der kein anderer Austausch möglich ist.

3. Verfahren nach Anspruch 2, **dadurch gekennzeichnet, dass** das zweite Modul (57) ferner zeitlich die zu realisierenden Zusatzaufgaben (17) verwaltet und dass das dritte Modul (59) diese Aufgaben in die allgemeine Sequenzierung einfügt.

4. Verfahren nach Anspruch 3, **dadurch gekennzeichnet, dass** die Zusatzaufgaben (17) während der Zeitintervalle (43) von den Austauschen im nicht selektiven Modus zugeordneten Perioden (41) ausgeführt werden, während der kein Abfrage- (21) oder Antworthorchvorgang (22) ausgeführt werden kann, der eine Transaktion im selektiven Modus bildet.

5. Verfahren nach Anspruch 3, **dadurch gekennzeichnet, dass** die Zusatzaufgaben (17) Aufgaben zum Testen des ordnungsgemäßen Betriebs des Radars sind.

6. Verfahren nach einem der Ansprüche 2 bis 5, **dadurch gekennzeichnet, dass** das zweite Modul (57) einen Indikator (512) für eine vorhersehbare Überlastung mit Transaktionen im selektiven Modus ausarbeitet und diesen Indikator zum ersten Modul (52) und zum System zur räumlich-zeitlichen Verwaltung des Radars sendet, wobei der Indikator aktiviert wird, wenn es aufgrund der durchzuführenden Anzahl von Transaktionen (21, 22) im selektiven Modus und der Zeitintervalle (12, 13, 15 oder 16), während der keine Transaktion möglich ist, nicht möglich ist, die Gesamtheit der im selektiven Modus benötigten Transaktionen (21, 22) durchzuführen.

7. Verfahren nach Anspruch 6, **dadurch gekennzeichnet, dass**, wenn der Indikator für eine vorhersehbare Überlastung aktiviert wird, das erste Modul (52) eine Verkettung der Informationsaustauschperioden im nicht selektiven Modus (61, 62) modifiziert, um Informationsaustauschperioden im selektiven Modus (63) in diese Verkettung einzufügen, wobei die Informationsaustausche im selektiven Modus dann gleichzeitig in Form von auf asynchrone Weise (42) bewirkten Transaktionen und in Form von Transaktionen realisiert werden, die während der Perioden (63) ausgeführt werden, die den eingefügten Austauschen im selektiven Modus zugeordnet sind.

## Claims

1. Method for the real-time management and sequencing of the information interchanges between a secondary radar and a plurality of aircraft, the interchanges between the radar and a given aircraft being performed, depending on the aircraft concerned, either in a non-selective, SSR, IFF or "All Call" interrogation mode or in a selective "Roll Call" interrogation mode, **characterized in that**, the information interchanges according to the non-selective interrogation modes being performed during successive periods (41), each period being specifically allocated to one or more non-selective modes, the interchanges in selective interrogation mode are performed in the form of transactions (21, 22), each transaction forming an information interchange between the radar and a given aircraft and being temporally inserted into the time slots (43) not used for interrogation-response tasks in non-selective mode in the periods (41) allocated to the non-selective modes.

2. Method according to Claim 1, **characterized in that** it comprises at least:
- a first module (52) responsible for the time management and arrangement of the interchanges to be performed within periods allocated to interchanges in non-selective mode;
- a second module (57) responsible for the time management of the transactions to be performed in selective mode;
- a third module (59) responsible for the arrangement in time of the transactions to be performed in selective mode and for the insertion of the interrogations and the responses forming these transactions in the periods allocated to the interchanges in non-selective mode;
the second module (57) supplying the third module (59) with the information relating to the transactions to be performed given the position of the radar antenna and the first module (52) supplying the third module (59), for each period allocated to interchanges in non-selective mode, with the information relating to the position and the duration of the time slots (12, 13, 15 or 16) during which no other interchange is possible.

3. Method according to Claim 2, **characterized in that** the second module (57) also temporally manages the ancillary tasks (17) to be performed and that the third module (59) inserts these tasks into the general sequencing.

4. Method according to Claim 3, **characterized in that** the ancillary tasks (17) are executed during the time slots (43) of the periods (41) allocated to the interchanges in non-selective mode, during which no interrogation (21) or listening-for-response (22) operation forming a transaction in selective mode can be executed.

5. Method according to Claim 3, **characterized in that** the ancillary tasks (17) are tasks for testing the correct operation of the radar.

6. Method according to Claims 2 to 5, **characterized in that** the second module (57) generates a predictable overload indicator (512) for the transactions in selective mode, and transmits this indicator to the first module (52) and to the space-time management system of the radar, the indicator being activated if, given the number of transactions (21, 22) in selective mode to be performed and the time slots (12, 13, 15 or 16) during which no transaction is possible, it is not possible to perform all the required transactions (21, 22) in selective mode.

7. Method according to Claim 6, **characterized in that**, when the predictable overload indicator is activated, the first module (52) modifies the sequencing of the information interchange periods in non-selective mode (61, 62) to insert information interchange periods in selective mode (63) into this sequencing, the information interchanges in selective mode then being performed both in the form of transactions performed asynchronously (42) and in the form of transactions executed during the periods (63) allocated to the interchanges in selective mode that have been inserted.
